Europäisches Patentamt

(19) European Patent Office

Office européen des brevets

(11) Publication number : **0 542 545 A1**

# (12) EUROPEAN PATENT APPLICATION

(21) Application number : 92310339.4

(22) Date of filing : 12.11.92

(51) Int. Cl.$^5$ : **C06B 21/00, B01J 2/18, B05B 17/06, C06B 31/28**

(30) Priority : **15.11.91 GB 9124304**

(43) Date of publication of application :
**19.05.93 Bulletin 93/20**

(84) Designated Contracting States :
**DE FR GB SE**

(71) Applicant : **IMPERIAL CHEMICAL INDUSTRIES PLC**
**Imperial Chemical House, Millbank**
**London SW1P 3JF (GB)**

(72) Inventor : **Oliver, Raymond**
**68 Junction Road, Norton**
**Stockton-on-Tees, Cleveland (GB)**

(74) Representative : **Parker, Vernon et al**
**ICI Group Patents Services Dept. PO Box 6**
**Shire Park Bessemer Road**
**Welwyn Garden City Herts, AL7 1HD (GB)**

(54) **Prilling process.**

(57)   Explosive grade ammonium nitrate prill is produced by a prilling process wherein aqueous ammonium nitrate liquid comprising between 92 to 96% w/w ammonium nitrate is caused to flow through uniformly sized orifices in a spray plate thereby forming liquid jets and, as the liquid flows through the orifices, the plate is vibrated in a plane substantially perpendicular to the direction of flow of the liquid jets thereby producing an asymmetric disturbance to the surface of the liquid jets and the frequency of the vibration is at or within 10% (preferably within 5%) of the optimum frequency as given by the expression

$$f_{OPT} = u_j. (\pi.2^{0.5}.d_j(1 + 3z))^{-1} \quad (2)$$

wherein $f_{OPT}$ is the frequency in Hertz, $u_j$ is the velocity of the jet from the orifice (m.s$^{-1}$), $d_j$ is the diameter of the orifice (m) , z is the dimensionless group $(We_j)^{0.5}$, $(Re_j)^{-1}$, $We_j$ is $d_j u_j^2 p.y^{-1}$, $Re_j$ is $d_j u_j p.g^{-1}$, p is the density of the liquid (kg.m$^{-3}$), y is the surface tension of the liquid (N.m$^{-1}$) and g is the viscosity of the liquid (Ns.m$^{-2}$).

EP 0 542 545 A1

Jouve, 18, rue Saint-Denis, 75001 PARIS

This invention concerns ammonium nitrate prill as used in explosive formulations such as ANFO (which is ammonium nitrate (AN) prill containing absorbed fuel oil (F0) at a level of about 6% by weight or higher) and HANFO, or "Heavy ANFO", which is a blend of AN prill (or ANFO) and emulsion explosive. Blends of AN prill and emulsion (say around 20% AN prill by weight) are also called "doped emulsions".

Explosives grade ammonium nitrate prill (herein "EGAN" prill) is required to be sufficiently porous to be able to absorb the quantity of fuel oil needed for an effective explosives composition. Porosity, which is indicated comparatively by particle density and bulk density, is affected by the conditions of prill formation (especially the initial water content of the spray melt) and the conditions under which the residual small percentage of water (up to 5% by weight) in the collected product at the base of the prill tower is removed by a drying process (down to e.g. 0.1 to 0.2% by weight). The size of EGAN prill is usually around 2 to 3 mm diameter, but larger diameters are not excluded.

This invention provides a process for producing predominantly monosized EGAN prills in a prilling tower by a modification of the process described in published EP0320153.

It is known from EP-A-0320153 that the disintegration of a liquid jet comprising a highly concentrated solution of ammonium nitrate can be controlled so as to produce a substantially monosize distribution of droplets and hence, on solidification, particles. The disintegration is controlled by causing the plate, wherein orifices which produce liquid jets are located, to vibrate at a predetermined frequency and in a plane substantially perpendicular to the direction of flow of the liquid jets, thereby inducing a so-called asymmetric disturbance on the surface of the liquid jets. The vibration is required to have an amplitude which is substantially smaller than that used in other systems wherein the orifice containing plate is vibrated in a plane parallel to the direction of flow of the liquid jet and/or wherein the orifice containing plate is swung from side to side. The predetermined frequency is required to be calculated according to the expression

$$f_{opt} = u_j.(4.5d_j)^{-1} \quad (1)$$

wherein $f_{OPT}$ is the frequency in Hertz, $u_j$ is the velocity of the jet from the orifice (m.s$^{-1}$) and $d_j$ is the diameter of the orifice (m). The effect of applying a vibration having the predetermined frequency was confirmed using water, which flow properties are similar to those of a highly concentrated ammonium nitrate melt, and was successfully applied to the prilling of fertilizer grade ammonium nitrate. It is known in the art that fertilizer grade ammonium nitrate is required to have a high bulk density, and to be relatively non-porous. In order to achieve these desired properties the fertilizer grade ammonium nitrate is produced from a highly concentrated ammonium nitrate solution having an ammonium nitrate concentration of at least 99% by weight, which is known in the art as ammonium nitrate melt or molten ammonium nitrate. Prilling of ammonium nitrate solutions having ammonium nitrate concentrations of, say, 96% by weight ordinarily produces, by contrast, a lower density, porous, and physically weaker material which is not as suitable for use as a fertiliser.

The required characteristics of explosive grade ammonium nitrate are different from those of fertilizer grade ammonium nitrate in that explosive grade ammonium nitrate is required to be porous so that it can absorb fuel oil, usually at least 6% by weight fuel oil, preferably 8% or more. Thus, in the preparation of explosive grade ammonium nitrate it is required that a solution having a low concentration of ammonium nitrate, i.e. from about 92% to about 96% w/w, is fed to the prill head and the resulting droplets solidified in a generally similar process to that used for the preparation of fertilizer grade ammonium nitrate. In the preparation of explosive grade ammonium nitrate it is also desirable to obtain a monosize distribution of particles. Application of asymmetric vibrations to the orifice-containing plate at a predetermined frequency calculated according to the formula disclosed in EP-A-0320153, however, does not lead to the preparation of explosive grade ammonium nitrate comprising particles having a predominently monosize distribution. Indeed, as the plant production data included hereinafter show, the product was, in that instance, the same as when an unvibrated prill head was used.

It has now been found that prilling of solutions containing low concentrations of ammonium nitrate can be controlled to give monosize distributions of droplets and hence particles by applying asymmetric vibrations to the orifice-containing plate which are of a frequency determined according to an expression which is significantly different from expression (1) above.

Accordingly the present invention provides a prilling process wherein aqueous ammonium nitrate liquid comprising between 92 to 96% w/w ammonium nitrate is caused to flow through uniformly sized orifices in a spray plate thereby forming liquid jets and characterised in that, as the liquid flows through the orifices, the plate is vibrated in a plane substantially perpendicular to the direction of flow of the liquid jets thereby producing a asymmetric disturbance to the surface of the liquid jets and the frequency of the vibration is at or within 10% (preferably within 5%) of the optimum frequency as given by the expression

$$f_{OPT} = u_j.(\pi.2^{0.5}.d_j(1 + 3z))^{-1} \quad (2)$$

wherein $f_{OPT}$ is the frequency in Hertz, $u_j$ is the velocity of the jet from the orifice (m.s$^{-1}$), $d_j$ is the diameter of the orifice (m), z is the dimensionless group $(We_j)^{0.5}.(Re_j)^{-1}$, $We_j$ is $d_j u_j^2 p.y^{-1}$, $Re_j$ is $d_j u_j p.g^{-1}$, p is the density of the liquid (kg.m$^{-3}$), y is the surface tension of the liquid (N.m$^{-1}$) and g is the viscosity of the liquid (Ns.m$^{-2}$).

The two principal differences for present purposes between the prilling of fertilizer grade ammonium nitrate and explosive grade ammonium nitrate are desired prill size (~ 2 mm for EGAN; 2.6 mm for FGAN) and the viscosity of the ammonium nitrate solution, both of which influence the conditions under which optimum jet break-up to produce substantially mono-size droplets occurs. For instance, the viscosity of AN melt (fertilizer grade ~ 99.5% AN) is 0.0015 Ns.m$^{-2}$, whereas the viscosity of 95% AN "solution" as is typically suitable for explosive grade prill is 0.0065 Ns.m$^{-2}$ and at 92% AN is 0.010 Ns.m$^{-2}$. Thus, the EGAN ammonium nitrate solution is not an inviscid liquid, as is assumed in derivation of expression (1), but is a viscid liquid.

The plate used in the prilling process is generally circular in plan view and may also be dished such that the liquid jet issues from the convex side of the plate. Generally each plate contains many orifices, for example from 2000 to 3000 per plate. Although the vibration of the plate may be through a reciprocating translational movement it is particularly convenient to vibrate the plate through a reciprocating rotational movement wherein the axis of rotation is through the plate, e.g. through the centre of the plate, in a direction generally coincident with the direction of the liquid jet or jets produced. In such cases, the plate will have the orifices located in the outer annulus between, say, $\frac{2}{3}$ R and R, R being the radius.

Where the vibration is through a reciprocating rotational movement it is preferred that the vibration has an amplitude equivalent to $10^{-5}$ to $10^{-3}$ radians of rotation.

The liquid from which explosive grade ammonium nitrate is produced preferably is an aqueous solution containing from 92 to 96% w/w ammonium nitrate, more preferably from 94 to 96% w/w ammonium nitrate, and is free of other dissolved oxidizer salts, but it may desirably contain crystal habit modifiers and other property-modifying additives compatible with the prilling process.

The liquid jet formed by an orifice has a velocity which depends upon the size of the orifice and upon the mass flowrate. The orifice is usually in the form of a circular hole having a diameter from 0.5 to 2 mm, preferably 0.75 to 1.1 mm. In keeping with the teaching of EP-A-0320153 it is also preferred that the flow through the orifice is laminar and uniform flow of the liquid jet is achieved. Similarly, it is preferred that the jet Reynolds Number (Re$_j$) does not exceed 2300, and more particularly is in the range from 500 to 2000.

## EXAMPLE

EGAN prill was produced on an FGAN prill tower ordinarily used for routine commercial production of FGAN prill by the process generally described in EP-0320153, but here modified to meet the requirements for EGAN production. Thus, the tower was 40 metres high, 6 metres in diameter, and its vibrated prill head had 2100 holes drilled in the outer annulus (between $\frac{2}{3}$ R and R) of diameter 0.85 mm.

The process conditions were as follows:

| | |
|---|---|
| Spray Solution strength | - 95.5% AN in water (by weight) |
| Spray Solution temperature | - 140°C (i.e. sufficient to prevent crystallisation in the head). |
| Solution feed rate | - 12 m³/hr |
| Tower internal pressure | - around atmospheric. |
| Gas Flow | - 1 m/sec upflow |
| Gas temperature (IN) | - 20°C |
| Gas temperature (OUT) | - 40°C |
| Prill temperature (OUT) | - 80°C |

Other data relevant to Expression 2:

$$p = 1430 \text{ kg/m}^3$$
$$g = 5.5 - (6 \times 10^{-3}) \text{ Ns. m}^{-2}$$
$$y = 0.099 \text{ N m}^{-1}$$

Calculated $f_{opt}$ is 690 Hz. The plant was run at stepped f values between 600 and 750 Hz. The practical best f value was here 650 Hz as assessed by plant output prill sampling. At 680 Hz the product was slightly poorer, again according to the sample taken. At 785 Hz (the f value given by Expression 1 hereinbefore) the product was similar to that from a non-vibrated prill head.

The following table shows product prill size distributions (as mass-fraction (out of 100) retained on a sieve of the given hole size).

| SIZE | UNVIBRATED HEAD | VIBRATED HEAD (650 Hz) |
|---|---|---|
| 2.8 | 1.9 | 0.04 |
| 2.4 | 16.9 | 0.40 |
| 2.0 | 39.0 | 7.32 |
| 1.7 | 17.6 | 91.31 |
| 1.4 | 18.0 | 0.84 |
| 1.0 | 6.3 | 0.07 |
| <1.0 | 0.6 | 0.02 |

The corresponding sampled product produced at 680 Hz had a lower small particle fraction ($\leq$ 1.4) but a higher larger particle fraction (10.6 retained on a 2 mm sieve; 2.1 retained on a 2.4 mm sieve; 0.3 retained on a 2.8 mm sieve). Nevertheless the substantially mono-sizing of the product prill from the vibrated head is clearly demonstrated.

The properties of the 650 Hz prill product were:

Bulk Density         - 0.72
Friability             - good
Oil absorption       - 7.9% w/w
Explosive performance    - good

These results show that in any given practical plant the practically determined optimum frequency will be in the region of the theoretical optimum as expressed in equation 2 above but would not realistically by expected to coincide precisely. The theoretical optimum should therefore be regarded as the benchmark and actual plant performance at and around that frequency should then be monitored to establish the plant practical optimum. For a competently engineered plant, the practical optimum will be found to be comfortably within $\pm$ 10% of the theoretical optimum and, in any event, plant operation at a frequency within $\pm$ 10% of the theoretical optimum would in practice characterise satisfactory prill size distribution control.

## Claims

1. A prilling process wherein aqueous ammonium nitrate liquid comprising between 92 to 96% w/w ammonium nitrate is caused to flow through uniformly sized orifices in a spray plate thereby forming liquid jets and *characterised in that*, as the liquid flows through the orifices, the plate is vibrated in a plane substantially perpendicular to the direction of flow of the liquid jets thereby producing an asymmetric disturbance to the surface of the liquid jets and the frequency of the vibration is at or within 10% (preferably within 5%) of the optimum frequency as given by the expression

$$f_{OPT} = u_j.(\pi.2^{0.5}.d_j(1 + 3z)^{-1} \quad (2)$$

wherein $f_{OPT}$ is the frequency in Hertz, $u_j$ is the velocity of the jet from the orifice (m.s$^{-1}$), $d_j$ is the diameter of the orifice (m), z is the dimensionless group $(We_j)^{0.5}.(Re_j)^{-1}$, $We_j$ is $d_j u_j^2 p.y^{-1}$, $Re_j$ is $d_j u_j p.g^{-1}$, p is the density of the liquid (kg.m$^{-3}$), y is the surface tension of the liquid (N.m$^{-1}$) and g is the viscosity of the liquid (Ns.m$^{-2}$).

2. A prilling process for producing explosive grade ammonium nitrate prill (oil absorbency at least 6% by weight) in a prilling plant, wherein an asymmetrically vibrated prill head is deployed in the prilling plant, a frequency of head vibration is established at which optimum most nearly predominantly mono sized prills are produced and the process is thereafter operated in the plant with the prill head vibrated at a frequency within $\pm$ 5% of the so-established frequency.

3. A process as claimed in Claim 1 or Claim 2 wherein the prill is produced from an AN solution containing 94-96% by weight AN, with the balance being water (apart from dissolved process aids).

EP 0 542 545 A1

**European Patent Office**

# EUROPEAN SEARCH REPORT

Application Number

EP 92 31 0339

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | W. GERHARTZ 'Ullmann's Encyclopedia of Industrial Chemistry, Volume B2: Unit Operations I' 1988 , VCH VERLAGSGESELLSCHAFT MBH , WEINHEIM, GERMANY * page 6-3 - page 6-4 * | 1-3 | C06B21/00 B01J2/18 B05B17/06 C06B31/28 |
| D,Y | EP-A-0 320 153 (IMPERIAL CHEMICAL INDUSTRIES PLC) * page 1, line 55 - page 3, line 11; claims * | 1-3 | |
| A | ULTRASONICS vol. 14, no. 3, May 1976, GUILFORD, UNITED KINGDOM pages 107 - 110 B.A. KLOPOVSKY ET AL. 'The low liquid pressure acoustic hydrodynamic transducer and its use in spraying processes' * the whole document * | 1-3 | |
| A | EP-A-0 233 384 (STAMICARBON B.V.) * page 5 * | 1-3 | TECHNICAL FIELDS SEARCHED (Int. Cl.5) B01J B05B C06B |

The present search report has been drawn up for all claims

| Place of search | Date of completion of the search | Examiner |
|---|---|---|
| THE HAGUE | 15 MARCH 1993 | SCHUT R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)